(19) 

**Europäisches Patentamt**

**European Patent Office**

**Office européen des brevets**

(11) **EP 4 632 351 A1**

(12) # EUROPEAN PATENT APPLICATION

(43) Date of publication:
**15.10.2025 Bulletin 2025/42**

(21) Application number: **25168030.2**

(22) Date of filing: **02.04.2025**

(51) International Patent Classification (IPC):
**G01N 17/02** (2006.01) **H01M 10/42** (2006.01)

(52) Cooperative Patent Classification (CPC):
**G01N 17/02; H01M 10/4285; H01M 10/48**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.04.2024 KR 20240049634**

(71) Applicant: **SAMSUNG SDI CO., LTD.
Yongin-si, Gyeonggi-do 17084 (KR)**

(72) Inventors:
• **PARK, INJUN**
  **17084 Yongin-si, Gyeonggi-do (KR)**

• **KIM, MYUNGHOON**
  **17084 Yongin-si, Gyeonggi-do (KR)**
• **SHIN, JEONGMIN**
  **17084 Yongin-si, Gyeonggi-do (KR)**
• **KIM, AERAN**
  **17084 Yongin-si, Gyeonggi-do (KR)**
• **OH, SEUNGRYONG**
  **17084 Yongin-si, Gyeonggi-do (KR)**
• **KIM, YUNHEE**
  **17084 Yongin-si, Gyeonggi-do (KR)**

(74) Representative: **Gulde & Partner
Patent- und Rechtsanwaltskanzlei mbB
Berliner Freiheit 2
10785 Berlin (DE)**

(54) **CHARACTERISTIC MEASUREMENT DEVICE FOR SECONDARY BATTERY CASE**

(57)     A characteristic measurement apparatus for a secondary battery case includes a sealing member configured to seal an entrance of a metal case for a secondary battery whose characteristics are to be measured; a pair of washers connected to the sealing member and configured to be installed facing each other in the case; an auxiliary electrode configured to be positioned between the washers; and a reference electrode insulated from the auxiliary electrode and configured to be positioned between the washers.

FIG. 1

EP 4 632 351 A1

**Description**

**BACKGROUND**

**(a) Field**

The present disclosure relates to a case characteristic evaluation device, and more particularly, to a measurement apparatus for measuring a corrosion characteristic of a case for a secondary battery.

**(b) Description of the Related Art**

With technological development and demand for mobile devices, demand for secondary batteries as an energy source is increasing.

A secondary battery includes an electrode assembly that includes a positive electrode, a separator, and a negative electrode, and an electrolyte solution sealed in a case.

When conducting electrochemical evaluation of secondary batteries, the case was dismantled, partially bent, or planarized.

A metal secondary battery case may be manufactured by forming a shape using an iron material and then plating the shape with aluminum. During evaluation, a plating layer formed on a surface of the case may be damaged or peeled off. Therefore, the surface of the case may not maintain its initial state due to damage or peeling of the plating layer, making it impossible to accurately electrochemically evaluate the corrosion resistance or corrosion of the case.

The above-described information disclosed in the background technology of this disclosure is only for improving understanding of the background of the disclosure, and therefore may include information that does not constitute prior art.

**SUMMARY**

The present disclosure provides a characteristic measurement apparatus for a secondary battery case that is capable of evaluating an electrical characteristic of the case without sampling the secondary battery case. However, the technical objects of the present disclosure are not limited to the objects mentioned above, and other technical objects not mentioned will be clearly understood by those skilled in the art.

An embodiment of the present disclosure provides a characteristic measurement apparatus for a secondary battery case, including: a sealing member configured to seal an entrance of a metal case for a secondary battery whose characteristics are to be measured and configured to seal the case; a pair of washers connected to the sealing member and configured to be installed in the case facing each other; an auxiliary electrode configured to be positioned between the washers; and a reference electrode insulated from the auxiliary electrode and configured to be positioned between the washers.

The washers may be configured to be spaced apart from each other in a direction in which the washers are inserted into the metal case.

The auxiliary electrode includes a lead wire configured to extend to outside of the case, and the reference electrode may include lead wire configured to extend to outside the case.

The washers may include a plurality of through holes through which the first and second lead wires extend.

It may further include a lead wire electrically connected to the case.

The reference electrode may be wrapped with a porous film.

It may further include an electrolyte filled inside the case.

The reference electrode and auxiliary electrode may be configured installed to be immersed in the electrolyte.

The reference electrode may be made of lithium metal.

The auxiliary electrode may be made of at least one of gold, silver, platinum, carbon, titanium, stainless steel and lithium metal.

The washers may be made of TEFLON® (polytetrafluoroethylene).

The auxiliary electrode may be spaced apart from 1 mm to 5 mm from an inner wall of the metal case.

The reference electrode may be positioned between the auxiliary electrode and the metal case.

According to another embodiment, a secondary battery case and a characteristic measurement apparatus for measuring a characteristic of the secondary battery case may be provided. The secondary battery case may comprise a metal can. The characteristic measurement apparatus may comprise a sealing member sealing an entrance of a metal can; a pair of washers connected to the sealing member and facing each other in the can; an auxiliary electrode positioned between the washers; and a reference electrode insulated from the auxiliary electrode and positioned between the washers.

An electrolyte may be filled inside of the can.

The reference electrode and the auxiliary electrode may be immersed in the electrolyte.

The auxiliary electrode may be spaced 1 mm to 5 mm from an inner wall of the can.

The reference electrode may be positioned between the auxiliary electrode and the can.

As in an embodiment of the present disclosure, by using the measurement apparatus corrosion characteristic of a secondary battery case may be easily measured without changing a shape of the case. Accordingly, as compared to sampling a case to determine corrosion characteristic of a specific position, the corrosion characteristic may be accurately determined.

## BRIEF DESCRIPTION OF THE DRAWINGS

The following drawings attached to this specification illustrate preferred embodiments of the present disclosure, and together with the detailed description of the disclosure serve to further understand the technical idea of the present disclosure. The present disclosure should not be construed as limited to only the matters depicted in such drawings.

FIG. 1 illustrates a schematic perspective view of a characteristic measurement apparatus for a secondary battery case according to an embodiment of the present disclosure.

FIG. 2 illustrates a view for describing a method of measuring an electrical characteristic of a case using the measurement apparatus shown in FIG. 1.

FIG. 3 is a graph showing a Tafel plot measured using a measurement apparatus according to an embodiment of the present disclosure.

FIG. 4 is a graph showing a Nyquist plot measured using a measurement apparatus according to an embodiment of the present disclosure.

FIG. 5 is a graph showing a polarization curve measuring current density and potential using a characteristic measurement apparatus for a secondary battery case according to an embodiment of the present disclosure.

FIG. 6 and FIG. 7 illustrate a lithium secondary battery according to an embodiment of the present disclosure.

## DETAILED DESCRIPTION

Hereinafter, embodiments of the present disclosure will be described in detail with reference to the accompanying drawings. Terms and words used in this specification and claims should not be construed as limited to their usual or dictionary meanings. Rather, the terms and words should be construed based on the principle that the inventor can appropriately define the concept of the term in order to explain his or her invention in the best way, and the terms and words must be interpreted with a meaning and concept consistent with the technical idea of the present disclosure. Since the embodiments described in the specification and the configurations shown in the drawings are merely the most preferable some embodiment and configurations of the present disclosure, they do not represent all of the technical ideas of the present disclosure, and it should be understood that various equivalents and modified examples, which may replace the embodiments, are possible.

When used herein, "comprise, include," and/or "comprising, including" specifies the presence of the mentioned figures, numbers, steps, actions, members, elements and/or groups of these, and does not exclude the presence or addition of one or more other shapes, numbers, operations, members, elements and/or groups.

To facilitate understanding of the disclosure, the attached drawings are not drawn to actual scale and the dimensions of some components may be exaggerated. Furthermore, the same reference numbers may be assigned to the same components in different embodiments.

Although the first, second, etc. are used to describe various components, it goes without saying that these components are not limited by these terms. These terms are only used to distinguish one component from another component, and unless specifically stated to the contrary, the first component may also be a second component.

Throughout the specification, unless otherwise stated, each component may be singular or plural.

To illustrate the relationship of one element or feature to another element(s) or feature(s) as shown in a drawing, for ease of description, spatially relative terms such as "beneath," "below," "lower," "above," "upper," etc. may be used herein. Spatial relative position will be understood to encompass different directions of the device in use or operation in addition to the direction depicted in the figures. For example, if the device in the drawing is turned over, elements described as "below" or "lower" other elements are understood to be "above" or "upper" other elements. Accordingly, the term "down" may encompass both upward and downward directions.

Additionally, if a component is described as "connected to" or "coupled to" another component; the above components may be directly connected or connected to each other, but it should be understood that other components may be "interposed" between each component, or that each component may be "connected," "combined," or "connected" through other components.

The terms used in this specification are for describing embodiments of the present disclosure and are not intended to limit the present disclosure.

Hereinafter, a secondary battery according to an embodiment of the present disclosure will be described in detail with reference to the attached drawings.

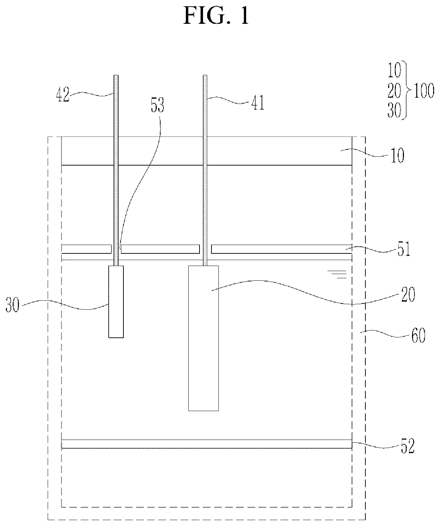

FIG. 1 illustrates a schematic perspective view of a characteristic measurement apparatus for a secondary battery case according to an embodiment of the present disclosure.

A characteristic measurement apparatus for a secondary battery case (hereinafter referred to as a measurement apparatus) according to an embodiment of the present disclosure may be installed in the secondary battery case.

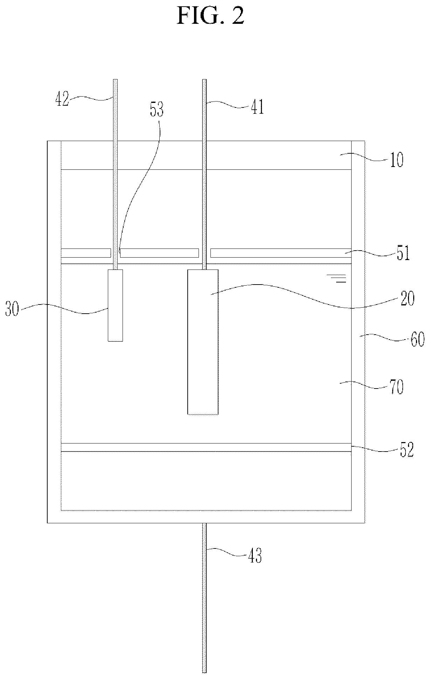

Referring to FIG. 1, the measurement apparatus 100 according to the present disclosure includes a sealing member 10, an auxiliary electrode 20, and a reference electrode 30 installed in a metal case 60 (which in the depicted embodiment is in the form of a can). The sealing member 10 is installed at an open entrance of the case 60 (see FIG. 2) to seal the case.

The auxiliary electrode 20 is inserted into the case and has a long rod/cylindrical shape. A first lead wire 41 for electrical connection to the outside may be connected to a first end of the auxiliary electrode 20. The first lead wire 41 extends through the sealing member 10 and is led out of the case 60. The auxiliary electrode 20 may be made of a conductive material, and it may be selected from materials with low corrosion and high electrochemical activity, such as gold, silver, platinum, carbon, titanium, and stainless steel. Additionally, lithium metal may also be used in a lithium battery electrolyte. When using lithium metal, it may be carried out in a safe location such as a moisture-controlled dry room or glove box. However, the present disclosure is not limited thereto.

The auxiliary electrode 20 may be positioned at a certain distance from an inner wall of the case 60. A distance between the inner wall of the case 60 and the auxiliary electrode 20 may vary depending on conductivity of the electrolyte, a structure of other electrode elements, etc., but may be, for example, 1 mm to 5 mm. In order to repeatedly measure corrosion characteristics of different cans, the distance between the auxiliary electrode and the inner wall of the case 60 may be measured while the distance is maintained constant, thereby minimizing errors.

The reference electrode 30 is inserted into the case and has a long rod/cylindrical shape. A second lead wire 42 for electrical connection to outside of the case 60 may be connected to a first end of the reference electrode 30. The reference electrode 30 is installed in a space between the auxiliary electrode 20 and the case 60. The reference electrode may be shorter in length and diameter than the auxiliary electrode 20. Advantageously, the reference electrode 30 may be wrapped with a porous film to prevent it from being short-circuited with the case and the auxiliary electrode 20. The porous film may be made of a same material as a separator used in a secondary battery. For example, the porous film may be made of polyethylene, polypropylene, polyvinylidene fluoride, or a multilayer film of two or more layers thereof, and mixed multilayer films such as a two-layer separator of polyethylene/polypropylene, a three-layer film of polyethylene/polypropylene/polyethylene, and a three-layer film of polypropylene/polyethylene/polypropylene may be used.

The reference electrode 30 may be any non-aqueous reference electrode that is stable in an electrolyte of the lithium ion battery, and may be, for example, lithium metal. When using lithium metal, it may be conducted in a moisture-controlled environment.

An upper washer 51 and a lower washer 52 are spaced apart to face each other in the case 60. The auxiliary electrode 20 and the reference electrode 30 may be positioned in a space between the upper washer 51 and the lower washer 52. A plurality of through holes 53 spaced apart from each other are formed in the washers 51 and 52, and the lead wires 41 and 42 of the auxiliary electrode 20 and the reference electrode 30 pass through the through holes 53.

The first lead wire 41 of the auxiliary electrode 20 is pulled up and out of the case 60 through the upper washer 51. The washers 51 and 52 are positioned at the upper and lower portions of the auxiliary electrode 20, so the auxiliary electrode 20 does not move within the case and is spaced apart from the inner wall of the case at a certain distance to prevent electrical connection.

The washers 51 and 52 may be formed to have a width substantially equal to an inner diameter of the case 60. The washers 51 and 52 may be installed in close contact with the inner wall of the case 60 and thereby be fixed so as not to move within the case 60. The washers 51 and 52 may be made of an insulating material such as TEFLON® (i.e., polytetrafluoroethylene), but are not limited thereto.

The above-described measurement apparatus 100 may be installed in a secondary battery case and used to measure electrical characteristics of the case.

FIG. 2 illustrates a view for describing a method of measuring electrical characteristics of a case using the measurement apparatus according to an embodiment of the present disclosure.

As shown in FIG. 2, the measurement apparatus 100 may be installed inside the secondary battery case 60. The case 60 may be configured for a cylindrical secondary battery case into which a wound electrode assembly is inserted. The case 60 may be made of iron in a cylindrical shape, and a nickel plating film may be formed on a surface to prevent corrosion. The plating film may be formed by electroplating and dip coating. In FIG. 2, a cylindrical metal case is shown, but the present disclosure is not limited thereto, and any case made of a metal is possible. The case may not only be cylindrical shaped, but may also be various other shapes, such as an angular metal case. In such a case, a planar shape of the sealing member may be the same as a cross section of the metal case in order to block entrance of the metal case.

A third lead wire 43 for electrical connection may be connected to a lower portion of the case 60 by welding.

An electrolyte 70 is injected into the case 60. The electrolyte 70 may be injected according to the capacity of the secondary battery to be measured, and the auxiliary electrode 20 may be immersed in the electrolyte 70.

The measurement apparatus 100 according to an embodiment of the present disclosure is inserted into the case 60 into which the electrolyte 70 is injected, the measurement apparatus 100 is inserted, and the sealing member 10 is positioned to block the entrance of the case 60 and seal an inside of the case 60. The washers 51 and 52 are positioned above and below the auxiliary electrode 20 to maintain a constant distance between the case and the auxiliary electrode.

As shown in FIG. 2, electrodes that can measure the electrical characteristic of the case are configured by connecting a third lead wire 43 to the case, inserting the electrolyte and the measurement apparatus into the case, and sealing it. The electrodes including a working electrode, a reference electrode, and a potential electrode. In the depicted embodiment, there are three electrodes in the form of the case 60, the auxiliary electrode 20, and the reference electrode 30 of the measurement apparatus.

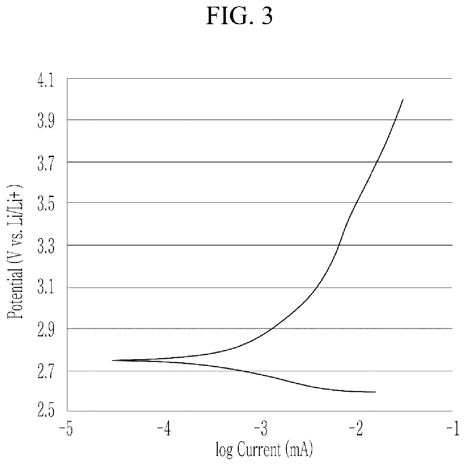

FIG. 3 is a graph showing a Tafel plot measured using a measurement apparatus according to an embodiment of the present disclosure. A Tafel plot, which is a method of evaluating the corrosion characteristics of materials, shows a log current according to changes in direct current voltage, and may appear different for different materials. According to an embodiment of the present disclosure shown in FIG. 3, a Tafel plot may be obtained, through which the corrosion characteristic of a secondary battery case may be identified.

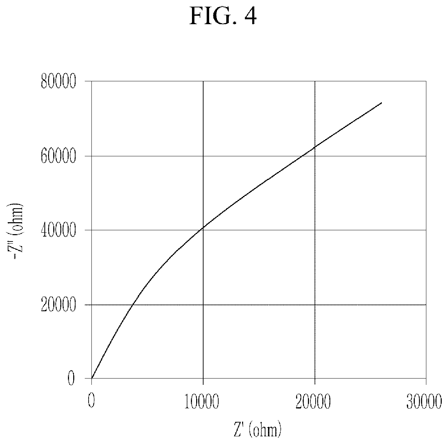

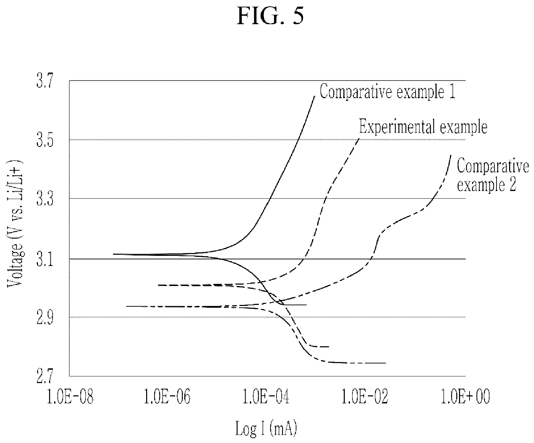

FIG. 4 is a Nyquist plot measured using a measurement apparatus according to an embodiment of the present disclosure. Electrochemical impedance spectroscopy (EIS), which evaluates the corrosion characteristics of materials, may be used to evaluate the corrosion characteristics of materials by analyzing resistance produced by applying alternating voltage using a Nyquist plot. According to an embodiment of the present disclosures shown in FIG. 4, a Nyquist plot may be obtained, through which the corrosion characteristic of a secondary battery case may be identified. This will be described in more detail with reference to FIG. 5 and Table 1.

Referring to Table 1, undamaged secondary battery cases in the form of cylindrical cans were prepared as Comparative Examples 1 and 2, and a plating film of a same cylindrical can as in Comparative Example 1 was damaged and prepared as an experimental example.

[Table 1]

| | | Damage exists or not? | Ecorr (mV) | icorr (uA) | Protection Efficiency (%) |
| --- | --- | --- | --- | --- | --- |
| Comparative Example 1 | cylindrical, Iron main body+ nickel plating film | No damage | 3.113 | 0.027 | 87.02 |
| Comparative Example 2 | cylindrical, iron main body | No damage | 2.938 | 0.208 | 0.00 |
| Experimental Example | cylindrical, Iron main body+ nickel plating film | Damage exists | 3.004 | 0.151 | 27.40 |

In the experimental example, when the nickel plating film is damaged, a surface of a main body positioned under the plating film is exposed. The main body is made of iron, and the area exposed to iron may vary depending on an area of the damaged plating film.

FIG. 5 illustrates a graph showing a polarization curve measuring current density and potential using a characteristic measurement apparatus for a secondary battery case according to an embodiment of the present disclosure.

Referring to FIG. 5 and Table 1, as the damaged area increases, the exposed iron surface increases, a corrosion potential Ecorr decreases, and a corrosion current icorr increases. This is because iron has a higher tendency to ionize and has a faster ionization rate than nickel. Thus, as the area exposed to iron increases, the corrosion potential Ecorr decreases and the corrosion current increases.

Accordingly, it can be seen that the experimental example has a higher corrosion potential and lower corrosion current than Comparative Example 2, which consists only of iron. The experimental example also has a lower corrosion potential and a higher corrosion current than Comparative Example 1, which includes an undamaged nickel plating film.

As such, using a characteristic measurement apparatus for a secondary battery can according to an embodiment of the present disclosure, damage may be determined by measuring a current and a potential and comparing it to measured values of an undamaged reference can.

A degree of damage to the plating film may be determined from the measured data by converting a measurement value according to area into data, which may be obtained using an anti-corrosion efficiency.

Equation 1 may be used for calculating a corrosion protection efficiency. Corrosion protection efficiency quantitatively represents health of the plating film. The corrosion protection efficiency may be obtained by comparing the corrosion current icorr (base material) of Comparative Example 2, which does not include a plating film, with a can having a plating film to be measured, e.g., a corrosion current icorr' which is an experimental example.

[Equation 1]

$$Protection\ efficiency\ [\%] = \left(1 - \frac{i\ corr^2}{i\ corr\ (base\ material)}\right) \times 100$$

Referring to Table 1, if the efficiency of Comparative Example 2, which serves as a reference, is 0, it can be seen that the efficiency of Comparative Example 1 is 87.02 %, the efficiency of the experimental example is 27.40 %. Thus, the efficiency of the experimental example is lower than that of Comparative Example 1.

In this way, the degree of damage to a case of a secondary battery may be easily determined by calculating the efficiency.

According to an embodiment, the characteristic measurement apparatus for a secondary battery case may be applied to metal cases of various shapes, such as a cylindrical or angular shape.

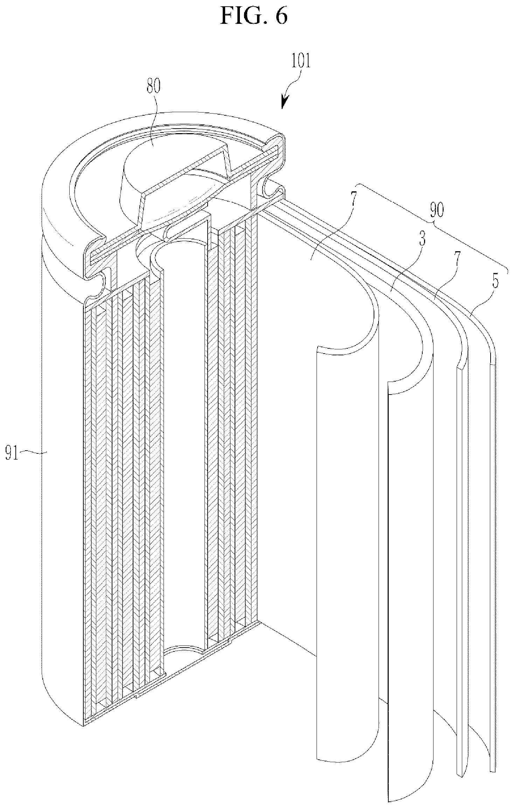

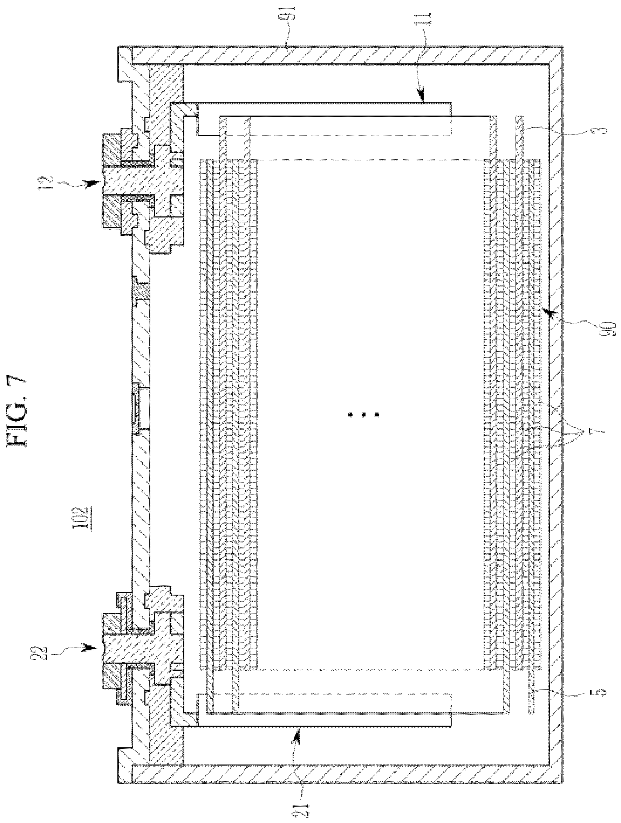

FIG. 6 and FIG. 7 illustrate a lithium secondary battery according to an embodiment of the present disclosure.

Lithium secondary batteries may be classified into a cylindrical, angular, coin shape, etc. depending on their shape. FIG. 6 may be said to illustrate a cylindrical battery, and FIG. 7 may be said to illustrate an angular battery. Referring to FIG. 6 and FIG. 7, a lithium secondary battery 101 may include an electrode assembly 90 with a separator 7 provided between a positive electrode 3 and a negative electrode 5, and a case 91 in which the electrode assembly 90 is embedded. The positive electrode 3, the negative electrode 5, and the separator 7 may be impregnated with an electrolyte solution (not shown). The lithium secondary battery 101 may include a sealing member 80 that seals the case 91 as shown in FIG. 6. Additionally, in FIG. 7, a lithium secondary battery 102 may include a positive electrode lead tab 11, a positive terminal 12, a negative lead tab 21, and a negative terminal 22.

While this disclosure has been described in connection with what is presently considered to be practical embodiments, it is to be understood that the disclosure is not limited to the disclosed embodiments. On the contrary, the disclosure is intended to cover various modifications and equivalent arrangements.

<Description of Symbols>

| | | | |
|---|---|---|---|
| 10, 80: | sealing member | 20: | auxiliary electrode |
| 30: | reference electrode | 41: | first lead wire |
| 42: | second lead wire | 43: | third lead wire |
| 60, 91: | case | 90: | electrode assembly |
| 100: | measurement apparatus | | |

Claims

1. A characteristic measurement apparatus for a secondary battery case (60, 91), the apparatus comprising:

   a sealing member (10, 80) configured to seal an entrance of a metal case (60, 91) for a secondary battery whose characteristics are to be measured;
   a pair of washers (51, 52) connected to the sealing member (10, 80) and configured to be installed facing each other in the case (60, 91);
   an auxiliary electrode (20) configured to be positioned between the washers (51, 52); and
   a reference electrode (30) insulated from the auxiliary electrode (20) and configured to be positioned between the washers (51, 52).

2. The characteristic measurement apparatus of claim 1, wherein the washers (51, 52) are configured to be spaced apart from each other in a direction in which the washers (51, 52) are inserted into the metal case (60, 91).

3. The characteristic measurement apparatus of claim 2, wherein the auxiliary electrode (20) includes a lead wire (41, 42) configured to extend to outside of the case (60, 91), and the reference electrode (30) includes a lead wire (41, 42) that configured to extend to outside the case (60, 91).

4. The characteristic measurement apparatus of claim 3, wherein the washers (51, 52) include a plurality of through holes through which the first and second lead wires (42) extend.

5. The characteristic measurement apparatus of claim 3 or 4, further comprising a lead wire (41, 42) configured to be electrically connected to the case (60, 91).

6. The characteristic measurement apparatus of claims 1 to 5, wherein the reference electrode (30) is wrapped with a porous film.

7. The characteristic measurement apparatus of claims 1 to 6, wherein the reference electrode (30) and the auxiliary electrode (20) are configured to be immersed in an electrolyte (70).

8. The characteristic measurement apparatus of claims 1 to 7, wherein the reference electrode (30) is made of lithium metal.

9. The characteristic measurement apparatus of claims 1 to 8, wherein the auxiliary electrode (20) is made of at least one of gold, silver, platinum, carbon, titanium, stainless steel and lithium metal.

10. The characteristic measurement apparatus of claims 1 to 9, wherein the washers (51, 52) are made of polytetrafluoroethylene.

11. A secondary battery case (60, 91) and a characteristic measurement apparatus for measuring a characteristic of the secondary battery case (60, 91),

> the secondary battery case (60, 91) comprising a metal can,
> the characteristic measurement apparatus comprising:
>
>> a sealing member (10, 80) sealing an entrance of a metal can;
>> a pair of washers (51, 52) connected to the sealing member (10, 80) and facing each other in the can;
>> an auxiliary electrode (20) positioned between the washers (51, 52); and
>> a reference electrode (30) insulated from the auxiliary electrode (20) and positioned between the washers (51, 52).

12. The secondary battery case (60, 91) and characteristic measurement apparatus of claim 11, further comprising an electrolyte (70) filled inside of the can.

13. The secondary battery case (60, 91) and characteristic measurement apparatus of claim 11 or 12, wherein the reference electrode (30) and the auxiliary electrode (20) are immersed in the electrolyte (70).

14. The secondary battery case (60, 91) and characteristic measurement apparatus of claims 11 to 13, wherein the auxiliary electrode (20) is spaced 1 mm to 5 mm from an inner wall of the can.

15. The secondary battery case (60, 91) and characteristic measurement apparatus of claims 11 to 14, wherein the reference electrode (30) is positioned between the auxiliary electrode (20) and the can.

FIG. 1

## FIG. 2

# FIG. 3

FIG. 4

# FIG. 5

# FIG. 6

# FIG. 7

EP 4 632 351 A1

**EUROPEAN SEARCH REPORT**

Application Number

EP 25 16 8030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2016 0039474 A (LG CHEMICAL LTD [KR]) 11 April 2016 (2016-04-11)<br>* paragraph [0001] - paragraph [0022]; figures 1-3 *<br>* paragraph [0047] * | 1-15 | INV.<br>G01N17/02<br>H01M10/42 |
| A | WATANABE HIKARI ET AL: "Electrochemical impedance analysis on positive electrode in lithium-ion battery with galvanostatic control",<br>JOURNAL OF POWER SOURCES, ELSEVIER, AMSTERDAM, NL,<br>vol. 507, 17 July 2021 (2021-07-17), XP086723282,<br>ISSN: 0378-7753, DOI: 10.1016/J.JPOWSOUR.2021.230258<br>[retrieved on 2021-07-17]<br>* section 1 * | 1-15 | |

TECHNICAL FIELDS
SEARCHED      (IPC)

G01N
H01M

The present search report has been drawn up for all claims

| Place of search | Date of completion of the search | Examiner |
|---|---|---|
| The Hague | 22 August 2025 | Stavroulakis, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 8030

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2025

| Patent document cited in search report | Publication date | Patent family member(s) | Publication date |
|---|---|---|---|
| KR 20160039474 A | 11-04-2016 | NONE | |

For more details about this annex : see Official Journal of the European Patent Office, No. 12/82